# EUROPEAN PATENT APPLICATION

(11) **EP 4 039 553 A1**
(43) Date of publication of application: **10.08.2022**
(21) Application number: 22150297.4
(22) Date of filing: 05.01.2022
(51) Int. Cl.: B60W 20/12, B60W 20/16

(54) **ALARM DEVICE, ALARM SYSTEM, AND GATE DEVICE, ADAPTED FOR HYBRID VEHICLE**

(30) Priority: 05.02.2021 JP 2021017426
(71) Applicant: TOYOTA JIDOSHA KABUSHIKI KAISHA, Toyota-shi, Aichi-ken, 471-8571 (JP)
(72) Inventor: YOKOYAMA, Daiki, Toyota-shi, 471-8571 (JP); CHIBA, Hiroya, Toyota-shi, 471-8571 (JP); KAGEURA, Yoshiyuki, Toyota-shi, 471-8571 (JP); SHIMADA, Masanori, Toyota-shi, 471-8571 (JP); SAKAYANAGI, Yoshihiro, Toyota-shi, 471-8571 (JP)
(74) Representative: D Young & Co LLP

(57) **Abstract**

An alarm device adapted for a hybrid vehicle (10) equipped with an internal combustion engine (11) and an electric motor (12) is disclosed. A restriction zone, in which the operation of the internal combustion engine should be restricted, is defined in advance within a zone in which the vehicle can move. An alarm is issued by an alarm device (18) in response to determining that the SOC of a battery of a vehicle, which is about to enter the restriction zone, is lower than a predetermined threshold value.

## Description

### FIELD

The present disclosure relates to an alarm device, an alarm system, and a gate device, adapted for a hybrid vehicle.

### BACKGROUND

It is known a hybrid vehicle, which includes an electric motor for generating a driving force, a battery for supplying electric power to the electric motor, a generator for supplying electric power to the battery, and an internal combustion engine for driving the generator, in which, the internal combustion engine is operated when the remaining capacity of the battery is reduced to a lower limit capacity value, and the operation of the internal combustion engine is stopped when it is determined that the current position of the hybrid vehicle is within an enhanced air pollution prevention area (See, for example, Patent Literature 1). In Patent Literature 1, the internal combustion engine is stopped and power generation is thus stopped when the hybrid vehicle is positioned within the enhanced air pollution prevention area. Thus, the remaining capacity of the battery will continue to decrease in the enhanced air pollution prevention area. However, when the remaining capacity of the battery is reduced to an operating limit quantity, the hybrid vehicle can no longer travel and escape from the enhanced air pollution prevention area. Therefore, in Patent Literature 1, the lower limit capacity value is set to be a large value so that the hybrid vehicle can escape from the enhanced air pollution prevention area.

### [CITATION LIST]

### [PATENT LITERATURE]

[PTL 1] Japanese Unexamined Patent Publication (Kokai) No. H07(1995)-075210

### SUMMARY

### [TECHNICAL PROBLEM]

Although the lower limit capacity value is set to be a large value in Patent Literature 1, the capacity of the battery has an upper limit, and accordingly, the electric power of the hybrid vehicle may be insufficient within the enhanced air pollution prevention area.

### [SOLUTION TO PROBLEM]

According to the present disclosure, the followings are provided.

### [Aspect 1]

An alarm device adapted for a hybrid vehicle equipped with an internal combustion engine and an electric motor, wherein a restriction zone is defined in advance in a zone in which the hybrid vehicle can move, and the operation of the internal combustion engine should be restricted in the restriction zone,
the alarm device being configured to issue an alarm in response to determining that the SOC of a battery of the hybrid vehicle, which is about to enter the restricted zone, is lower than a predetermined threshold value.

### [Aspect 2]

The alarm device according to aspect 1, wherein the alarm device is configured to issue the alarm in response to determining that the SOC of the battery of the hybrid vehicle, from which the distance to the restricted zone is shorter than a predetermined set distance, is lower than the threshold value.

### [Aspect 3]

The alarm device according to aspect 1 or 2, wherein the alarm device is provided within the hybrid vehicle.

### [Aspect 4]

The alarm device according to any one of aspects 1 to 3, wherein the alarm device is provided outside the hybrid vehicle.

### [Aspect 5]

The alarm device according to any one of aspects 1 to 4, wherein the threshold value is set to an SOC required for the hybrid vehicle to reach a charging facility within the restriction zone.

### [Aspect 6]

The alarm device according to any one of aspects 1 to 5, wherein the threshold value is set to an SOC required for the hybrid vehicle to once enter the restriction zone and then exit the restriction zone.

### [Aspect 7]

An alarm system adapted for a hybrid vehicle equipped with an internal combustion engine and an electric motor, wherein a restriction zone is defined in advance in a zone in which the hybrid vehicle can move, and the operation of the internal combustion engine should be restricted in the restriction zone,
the alarm system being configured to:
determine whether the hybrid vehicle is about to enter the restriction zone;
determine whether the SOC of a battery of the hybrid vehicle, which is determined to be about to enter the restricted zone, is lower than a predetermined threshold value; and
issue an alarm in response to determining that the SOC of the battery of the hybrid vehicle, which is determined to be about to enter the restricted zone, is lower than the threshold value.

### [Aspect 8]

A gate device adapted for a hybrid vehicle equipped with an internal combustion engine and an electric motor, wherein a restriction zone is defined in advance in a zone in which the hybrid vehicle can move, and the operation of the internal combustion engine should be restricted in the restriction zone,
wherein:
the gate device is provided at an entrance of the restriction zone; and
the gate device is configured to close the entrance of the restriction zone in response to determining that the SOC of the battery of the hybrid vehicle, which is about to enter the restriction zone from the entrance, is lower than a predetermined threshold value.

### [ADVANTAGEOUS EFFECTS OF INVENTION]

An occurrence of a situation in which electric power of the hybrid vehicle is short in a restriction zone can be limited.

### BRIEF DESCRIPTION OF DRAWINGS

FIG. 1 is a schematic overall view of a control system of an embodiment according to the present disclosure.
FIG. 2 is a schematic view of a restriction zone of an embodiment according to the present disclosure.
FIG. 3 is a schematic diagram explaining communication between a vehicle and a server in an embodiment according to the present disclosure.
FIG. 4 is a schematic diagram explaining communication between a vehicle and a server in another embodiment according to the present disclosure.
FIG. 5 is a schematic view explaining an example of a threshold value in an embodiment according to the present disclosure.
FIG. 6 is a schematic view explaining another example of the threshold value in the embodiment according to the present disclosure.
FIG. 7 is a flowchart for executing a driving control routine of an embodiment according to the present disclosure.
FIG. 8 is a flowchart for executing an alarm control routine of an embodiment according to the present disclosure.
FIG. 9 is a functional block diagram of a vehicle in an embodiment according to the present disclosure.
FIG. 10 is a functional block diagram of a server in an embodiment according to the present disclosure.
FIG. 11 is a schematic overall view of a control system of another embodiment according to the present disclosure.
FIG. 12 is a schematic overall view of a control system of still another embodiment according to the present disclosure.
FIG. 13 is a schematic view of a gate device of still another embodiment according to the present disclosure.
FIG. 14 is a flowchart for executing, in a vehicle, a gate control routine of the embodiment of FIGS. 12 and 13.
FIG. 15 is a flowchart for executing, in a gate device, a gate control routine of the embodiment of FIGS. 12 and 13.
FIG. 16 is a schematic overall view of still another embodiment according to the present disclosure.

### DESCRIPTION OF EMBODIMENTS

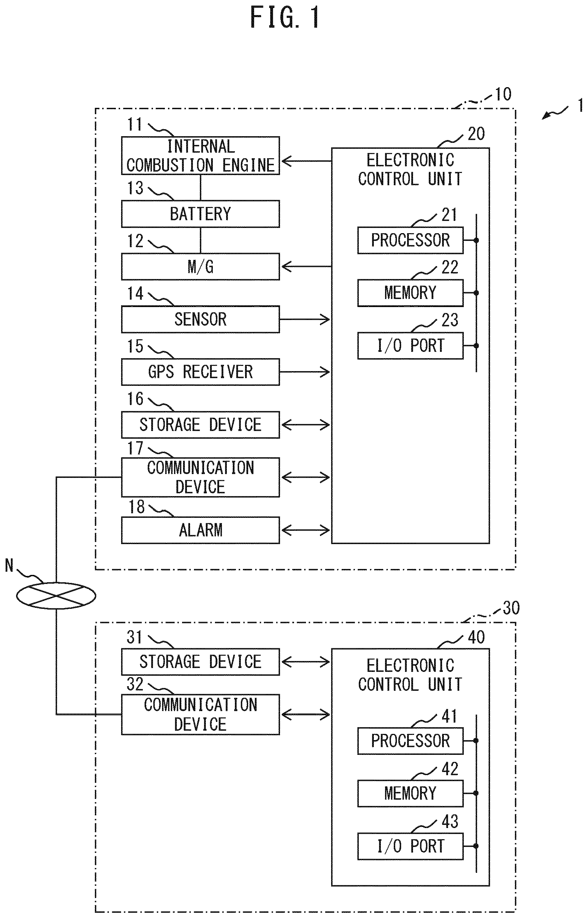

Referring to FIG. 1, a control system 1 for a hybrid vehicle of an embodiment according to the present disclosure includes a hybrid vehicle 10 and a server 30 outside of the hybrid vehicle 10.

The hybrid vehicle 10 of the embodiment according to the present disclosure includes an internal combustion engine 11, a motor generator (M/G) 12, a battery 13, at least one sensor 14, a GPS receiver 15, a storage device 16, a communication device 17, and an alarm 18, and an electronic control unit 20.

The internal combustion engine 11 of the embodiment according to the present disclosure is composed of, for example, a spark-ignition engine or a compression-ignition engine. The internal combustion engine 11 (for example, a fuel injection valve, a spark plug, a throttle valve, etc.) is controlled based on a signal from the electronic control unit 20.

Further, the motor generator 12 of the embodiment according to the present disclosure operates as an electric motor or a power generator. The motor generator 12 is controlled based on a signal from the electronic control unit 20.

In the embodiment according to the present disclosure, an EV operation or an HV operation is selectively performed in the hybrid vehicle 10. In the EV operation of the embodiment according to the present disclosure, the motor generator 12 is operated as an electric motor while the internal combustion engine 11 is stopped. In this respect, an output of the motor generator 12 is transmitted to an axle. On the other hand, in the HV operation of the embodiment according to the present disclosure, the internal combustion engine 11 is operated while the motor generator 12 is operated as an electric motor. In this respect, in one example, the output of the internal combustion engine 11 and the output of the motor generator 12 are transmitted to the axle. In another example, the output of the motor generator 12 is transmitted to the axle, whereas the output of the internal combustion engine 11 is transmitted to a generator (not shown) to operate the generator. The electric power generated by the generator is sent to the motor generator 12 or the battery 13. In yet another example, a part of the output of the internal combustion engine 11 and the output of the motor generator 12 are transmitted to the axle, and the rest of the output of the internal combustion engine 11 is transmitted to the generator. The electric power generated by the generator is sent to the motor generator 12 or the battery 13. Further, in the embodiment according to the present disclosure, in the EV operation and the HV operation, a regenerative control operation using the motor generator 12 as a generator is performed, for example, during a deceleration operation. The electric power generated by the regenerative control operation is sent to the battery 13.

The battery 13 of the embodiment according to the present disclosure is charged by electric power from the motor generator 12 operating as a generator or a generator (not shown) driven by the internal combustion engine 11. In another embodiment (not shown), the battery 13 can also be charged by an external power source. On the other hand, in the embodiment according to the present disclosure, electric power is supplied from the battery 13 to the motor generator 12 that operates as an electric motor, the electronic control unit 20, and other in-vehicle devices.

The sensors 14 of the embodiment according to the present disclosure detect various raw data. The sensors 14 of the embodiment according to the present disclosure include, for example, a load sensor for detecting a required vehicle load represented by the amount of depression of an accelerator pedal, a throttle position sensor for detecting the throttle position of the internal combustion engine 11, an NOx sensor for detecting the NOx concentration in the exhaust gas of the internal combustion engine 11, a rotation speed sensor for detecting the rotation speed of the internal combustion engine 11, a voltmeter and a current meter for detecting the voltage and current of the battery 13, a speed sensor for detecting the speed of the vehicle 10, etc. Output signals of these sensors 14 are input to the electronic control unit 20.

The GPS receiver 15 of the embodiment according to the present disclosure receives a signal from GPS satellites, thereby detecting information representing an absolute position (for example, longitude and latitude) of the vehicle 10. The position information of the vehicle 10 is input to the electronic control unit 20.

Various data, in addition to map information, are stored in advance in the storage device 16 of the embodiment according to the present disclosure. The communication device 17 of the embodiment according to the present disclosure can be connected to a communication network N such as the Internet.

The alarm 18 of the embodiment according to the present disclosure gives an alarm to an occupant(s) (including the driver) of the vehicle 10. In an example shown in FIG. 1, the alarm 18 is mounted in the vehicle 10. In this respect, the alarm 18 includes, for example, at least one of a display or lamp for a visual alarm, a speaker for an auditory alarm, and a vibrator for a tactile alarm.

The electronic control unit 20 of the vehicle 10 of the embodiment according to the present disclosure includes one or more processors 21, one or more memories 22 and an input/output (I/O) port 23, which are communicably connected to one another by a bidirectional bus. The memories 22 include, for example, a ROM, a RAM, etc. Various programs are stored in the memories 22, and various functions are realized by executing these programs in the processors 21. The above-mentioned internal combustion engine 11, the motor generator 12, the sensors 14, the GPS receiver 15, the storage device 16, the communication device 17, and the alarm 18 are communicably connected to the input/output port 23 of the embodiment according to the present disclosure. Further, in the processors 21 of the embodiment according to the present disclosure, the SOC or charge rate of the battery 13 is computed based on, for example, the voltage and current of the battery 13.

Further, referring to FIG. 1, the server 30 of the embodiment according to the present disclosure includes a storage device 31, a communication device 32, and an electronic control unit 40.

The storage device 31 of the embodiment according to the present disclosure stores the position information of a predetermined restriction zone or allowable zone. The restriction zone and the allowable zone will be described later.

The communication device 32 of the embodiment according to the present disclosure can be connected to the communication network N. Therefore, the vehicle 10 and the server 30 can be connected to each other via the communication network N.

As in the electronic control unit 20 of the vehicle 10, the electronic control unit 40 of the server 30 of the embodiment according to the present disclosure includes one or more processors 41, one or more memories 42 and an input/output port 43, which are communicably connected to one another by a bidirectional bus. The above-mentioned storage device 31 and communication device 32 are communicably connected to the input/output port 43 of the embodiment according to the present disclosure.

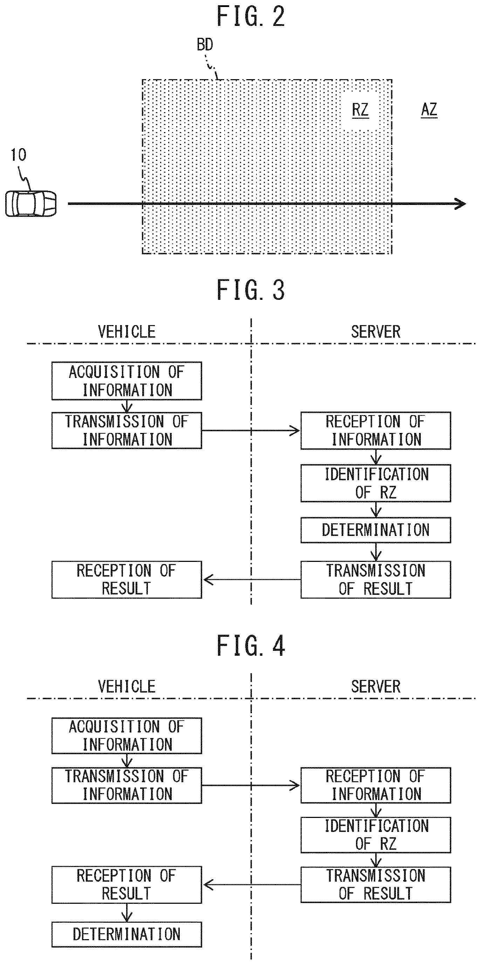

In the embodiment according to the present disclosure, a zone in which the vehicle 10 can move is divided in advance into a restriction zone in which the operation of the internal combustion engine is restricted, and an allowable zone in which the operation of the internal combustion engine is permitted. FIG. 2 schematically shows an example of a restriction zone RZ and an example of an allowable zone AZ of the embodiment according to the present disclosure. The restriction zone RZ of the embodiment according to the present disclosure is surrounded by a closed boundary BD. The restriction zone RZ is set in, for example, an urban area.

That is, in the embodiment according to the present disclosure, the operation of the internal combustion engine 11 is restricted when the vehicle 10 is located within the restriction zone RZ. In one example, the operation of the internal combustion engine 11 is prohibited. On the contrary, when the vehicle 10 is located within the allowable zone AZ, the operation of the internal combustion engine 11 is permitted.

Restrictions for the operation of the internal combustion engine 11 in the restriction zone RZ are based on a statutory or non-statutory rule. In one example, violating this rule will result in penalties such as fines. In another example, observing this rule will give incentives such as points.

In the embodiment according to the present disclosure, whether the vehicle 10 is located within the restriction zone RZ or the allowable zone AZ is determined.

When it is determined that the vehicle 10 is located within the allowable zone AZ, the EV operation or the HV operation is performed in the vehicle 10. In one example, the EV operation is performed when the required output of the vehicle 10 is smaller than a predetermined set output, and the HV operation is performed when the required output is larger than the set output. Further, the EV operation is performed when the SOC of the battery 13 is higher than a predetermined set SOC, and the HV operation is performed when the SOC is lower than the set SOC. In the HV operation in this respect, the generator is operated by the internal combustion engine 11 so as to increase the SOC of the battery 13. This prevents the SOC of the battery 13 from falling below a lower limit value. Note that the lower limit value is an SOC which makes recovery of the SOC extremely difficult if the SOC falls below the lower limit value.

On the contrary, when it is determined that the vehicle 10 is located within the restriction zone RZ, the EV operation is performed in the vehicle 10. That is, the operation of the internal combustion engine 11 is restricted.

In the embodiment according to the present disclosure, the determination as to whether the vehicle 10 is located within the restriction zone RZ is performed, for example, as follows. That is, as shown in FIG. 3, first, in the vehicle 10, the position information of the vehicle 10 at a current timing is acquired from the GPS receiver 15. Subsequently, the position information is transmitted from the vehicle 10 and received by the server 30. In the server 30, a restriction zone RZ in the vicinity of the vehicle 10 at the current timing is specified based on the position information of the vehicle 10, and the position information (for example, latitude and longitude) of the specified restriction zone RZ is extracted from the storage device 31. Subsequently, in the server 30, whether the vehicle 10 is located within the specified restriction zone RZ at the current timing is determined. Subsequently, a result of the determination is transmitted from the server 30 and received by the vehicle 10.

On the contrary, in another embodiment shown in FIG. 4, first, in the vehicle 10, the position information of the vehicle 10 at the current timing is acquired. Subsequently, the position information is transmitted from the vehicle 10 and received by the server 30. In the server 30, a restriction zone RZ in the vicinity of the vehicle 10 at the current timing is specified based on the position information of the vehicle 10, and the position information of the specified restriction zone RZ is extracted from the storage device 31. Subsequently, the information of the specified restriction zone RZ is transmitted from the server 30 and received by the vehicle 10. Subsequently, in the vehicle 10, whether the vehicle 10 is located within the specified restriction zone RZ at the current timing is determined.

In yet another embodiment, the position information of the restriction zone RZ is stored in the storage device 16 of the vehicle 10. In this respect, the vehicle 10 specifies the restriction zone RZ without communicating with the server 30, and determines whether the vehicle 10 is located within the restriction zone RZ.

By the way, in the embodiment according to the present disclosure, as described above, when it is determined that the vehicle 10 is located within the restriction zone RZ, the EV operation is performed. As the vehicle 10 continuously moves within the restriction zone RZ, the SOC of the battery 13 continues to decline, apart from the regenerative control operation. Thus, the SOC of the battery 13 may decline to the above-mentioned lower limit value. Therefore, the electric power required for the movement of the vehicle 10 may not be secured, and the vehicle 10 may not be able to escape from the restriction zone RZ.

Thus, in the embodiment according to the present disclosure, when the SOC of the battery 13 of the vehicle 10 which is about to enter the restriction zone RZ is determined to be lower than a predetermined threshold value, an alarm is issued by the alarm 18.

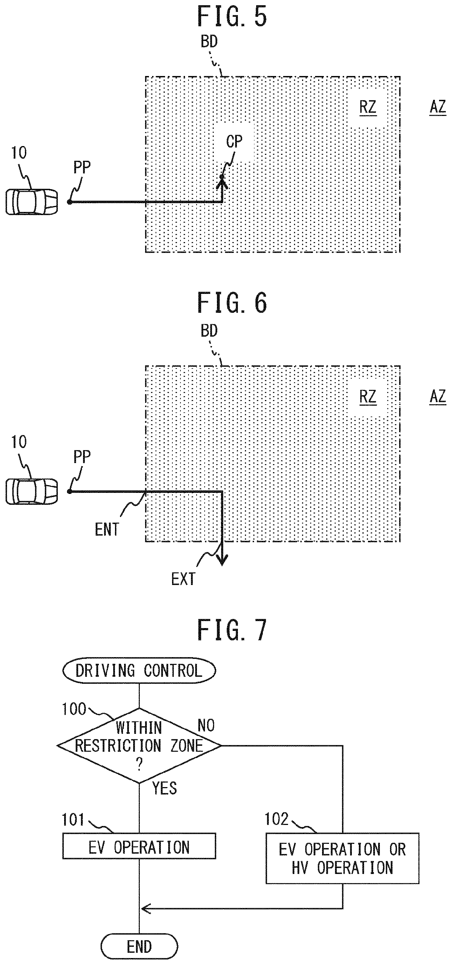

In one example, the threshold value in this respect is set to an SOC required for the vehicle 10 to reach a charging facility CP within the restriction zone RZ from a current position PP, as shown in FIG. 5. Therefore, in the example of FIG. 5, an alarm is issued when it is predicted that the vehicle 10 will run out of electric power to reach the charging facility CP within the restriction zone RZ. Note that, in the example shown in FIG. 5, the charging facility CP is a charging facility closest to the current position PP.

In another example, as shown in FIG. 6, the threshold value is set to an SOC required for the vehicle 10 to once enter the restriction zone RZ from an entrance ENT and then exit the restriction zone RZ from an exit EXT. Therefore, in the example of FIG. 6, an alarm is issued when it is predicted that the vehicle 10 that has entered the restriction zone RZ will run out of electric power to exit the restriction zone RZ. Note that, in the example shown in FIG. 6, the entrance ENT and the exit EXT are different, and the vehicle 10 is assumed to move from the entrance ENT to the exit EXT through the shortest route.

As a result, an occupant of the vehicle 10 can recognize, before the vehicle 10 enters the restriction zone RZ, that a situation in which the electric power of the vehicle 10 is insufficient within the restriction zone RZ may occur. In this respect, the occupant of the vehicle 10 can operate the vehicle 10 so that the vehicle 10 does not enter the restriction zone RZ. For example, the vehicle 10 is operated so as to remain within the allowable zone AZ, and electric power is generated by an HV operation. After that, when the SOC of the battery 13 is higher than the threshold value, the vehicle 10 is operated so as to enter the restriction zone RZ. Alternatively, the vehicle 10 is operated so as to move along a route through which it can reach a destination without entering the restriction zone RZ. In any event, the occurrence of a shortage of the electric power of the vehicle 10 within the restriction zone RZ is limited.

In the embodiment according to the present disclosure, when the distance from the vehicle 10 to the restriction zone RZ is determined to be shorter than a predetermined set distance, it is determined that the vehicle 10 is about to enter the restriction zone RZ. When the distance from the vehicle 10 to the restriction zone RZ is determined to be longer than the set distance, it is not determined that the vehicle 10 is about to enter the restriction zone RZ. In other words, an alarm is issued when the distance from the vehicle 10 to the restriction zone RZ is determined to be shorter than the predetermined set distance and the SOC of the battery 13 of the vehicle 10 in question is determined to be lower than the threshold value.

In the embodiment according to the present disclosure, whether the distance from the vehicle 10 to the restriction zone RZ is shorter than the set distance is determined, in the server 30, based on the position information of the vehicle 10 and the position information of the restriction zone RZ. In the example shown in FIG. 4, whether the distance from the vehicle 10 to the restriction zone RZ is shorter than the set distance is determined in the vehicle 10.

In yet another example, whether the vehicle 10 is about to enter the restriction zone RZ is determined based on the traveling direction and/or the speed of the vehicle 10.

FIG. 7 shows a routine for executing a driving control operation for the vehicle 10 in the embodiment according to the present disclosure. This routine is repeatedly executed in, for example, the electronic control unit 20 of the vehicle 10.

Referring to FIG. 7, first, at step 100, whether the vehicle 10 is located within the restriction zone RZ is determined. When it is determined that the vehicle 10 is located within the restriction zone RZ, the process shifts from step 100 to step 101, and the EV operation is performed. That is, the operation of the internal combustion engine 11 is restricted. On the contrary, when it is determined that the vehicle 10 is located within the allowable zone AZ, the process shifts from step 100 to step 102, and the EV operation or the HV operation is performed.

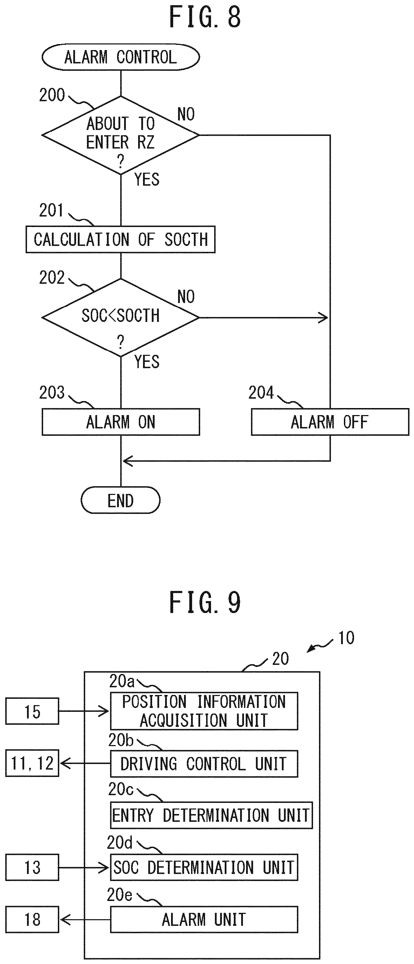

FIG. 8 shows a routine for executing an alarm control in the embodiment according to the present disclosure. This routine is repeatedly executed in, for example, the electronic control unit 20 of the vehicle 10.

Referring to FIG. 8, first, at step 200, whether the vehicle 10 is about to enter the restriction zone RZ is determined. When it is determined that the vehicle 10 is about to enter the restriction zone RZ, the process shifts to step 201, and a threshold value SOCTH is calculated. At the following step 202, whether the SOC of the battery 13 is lower than the threshold value SOCTH is determined. When SOC<SOCTH, the process shifts to step 203, and an alarm is issued by the alarm 18. On the contrary, when it is not determined, at step 200, that the vehicle 10 is about to enter the restriction zone RZ, and when SOC≥SOCTH at step 202, the process then shifts to step 204 and the alarm is stopped.

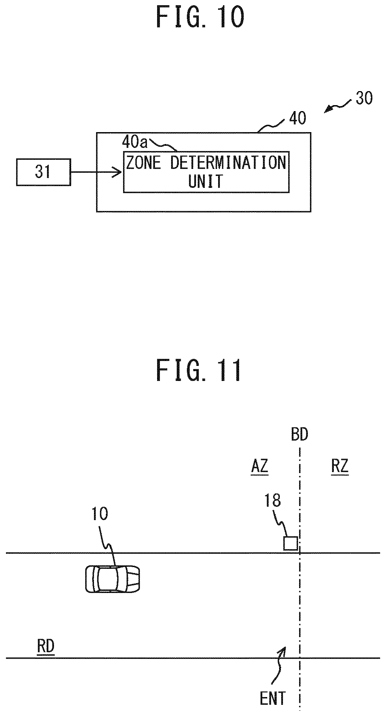

FIG. 9 shows a functional block diagram of the vehicle 10 of the embodiment according to the present disclosure. Referring to FIG. 9, the electronic control unit 20 of the vehicle 10 of the embodiment according to the present disclosure includes a position information acquisition unit 20a, a driving control unit 20b, an entry determination unit 20c, an SOC determination unit 20d, and an alarm unit 20e. In the example shown in FIG. 10, the position information acquisition unit 20a acquires the position information of the vehicle 10 from the GPS receiver 15 and transmits it to the server 30. The driving control unit 20b selectively performs the EV operation or the HV operation. The entry determination unit 20c determines whether the vehicle 10 is about to enter the restriction zone RZ. The SOC determination unit 20d determines whether the SOC of the battery 13 of the vehicle 10 which is about to enter the restriction zone RZ is lower than a predetermined threshold value. The alarm unit 20e issues an alarm using the alarm 18 when it is determined that the SOC of the battery 13 of the vehicle 10 which is about to enter the restriction zone RZ is lower than the predetermined threshold value.

On the other hand, FIG. 10 shows a functional block diagram of the server 30 of the embodiment according to the present disclosure. Referring to FIG. 10, the electronic control unit 40 of the server 30 of the embodiment according to the present disclosure includes a zone determination unit 40a. In the example shown in FIG. 10, the zone determination unit 40a determines whether the vehicle 10 is located within the restriction zone RZ, and transmits a result of the determination to the vehicle 10.

In another embodiment shown in FIG. 4, a zone determination unit similar to the zone determination unit 40a described above is provided in the electronic control unit 20 of the vehicle 10.

In another embodiment according to the present disclosure, the alarm 18 is provided outside the vehicle 10. For example, as shown in FIG. 11, the alarm device 18 is installed near the entrance ENT of the restriction zone RZ. The alarm 18 of this example includes a communication device capable of communicating with the vehicle 10, and operates based on a signal for issuing an alarm or a signal for stopping an alarm, which is transmitted from the vehicle 10. Even in this respect, an occupant of the vehicle 10 can recognize before the vehicle 10 enters the restriction zone RZ that a situation of a shortage of the electric power of the vehicle 10 may occur within the restriction zone RZ. In the drawings, RD indicates a road.

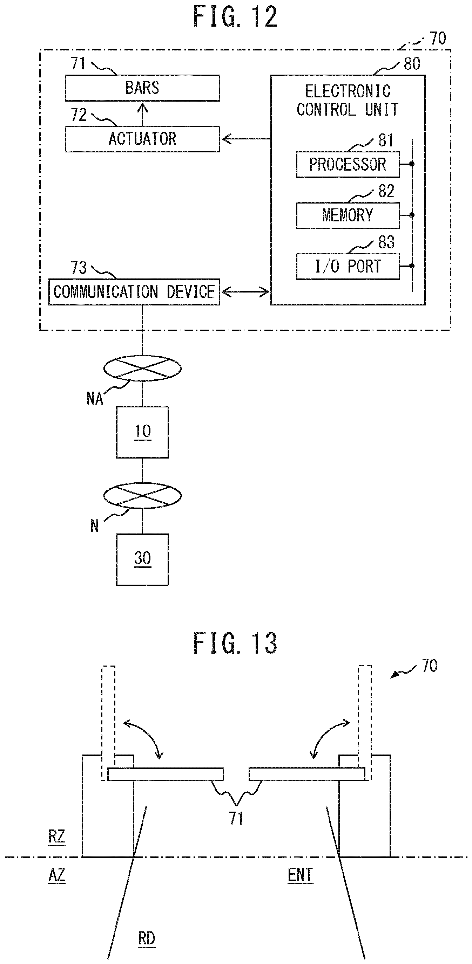

FIGS. 12 and 13 show yet another embodiment according to the present disclosure. In the embodiment shown in FIGS. 12 and 13, a gate device 70 is provided at the entrance ENT of the restriction zone RZ. As shown in FIG. 12, the gate device 70 includes one or more bars 71, an actuator 72, a communication device 73, and an electronic control unit 80.

In the embodiment shown in FIGS. 12 and 13, the bars 71 are configured to be movable, by the actuator 72, between an opening position (dotted line in FIG. 13) for opening the entrance ENT of the restriction zone RZ and a closing position (solid line in FIG. 13) for closing the entrance ENT. When the bars 71 are in the opening position, the entrance ENT of the restriction zone RZ is opened, and the vehicle 10 is allowed to enter the restriction zone RZ from the entrance ENT. On the contrary, when the bars 71 are in the closing position, the entrance ENT is closed, and the vehicle 10 is limited from entering the restriction zone RZ from the entrance ENT.

The communication device 73 of the embodiment shown in FIGS. 12 and 13 can communicate with the communication device 17 of the vehicle 10 via a communication network NA. The communication network NA is the same as the communication network N. Or, the communication network NA is different from the communication network N.

As in the electronic control unit 20 of the embodiment shown in FIG. 1, the electronic control unit 80 of the embodiment shown in FIGS. 12 and 13 includes a processor 81, a memory 82, and an input/output (I/O) port 83.

In the embodiment shown in FIGS. 12 and 13, the bars 71 are located in the closing position when the SOC of the battery 13 of the vehicle 10 which is about to enter the restriction zone RZ from the entrance ENT is lower than a predetermined threshold value. That is, when it is determined in, for example, the vehicle 10 that the vehicle 10 is about to enter the restriction zone RZ from the entrance ENT and the SOC of the battery 13 of the vehicle 10 is lower than a threshold value, a signal for closing the entrance ENT is transmitted from the vehicle 10 to the gate device 70. Upon receiving the signal for closing the entrance ENT, the gate device 70 moves the bars 71 to the closing position. As a result, an occurrence of a situation in which the electric power of the vehicle 10 is short within the restriction zone RZ is limited.

When it is not determined that the SOC of the battery 13 of the vehicle 10 which is about to enter the restriction zone RZ from the entrance ENT is lower than the threshold value, the transmission of the signal for closing the entrance ENT is stopped. When not receiving the signal, the gate device 70 moves the bars 71 to the opening position. As a result, the vehicle 10 is allowed to enter the restriction zone RZ from the entrance ENT.

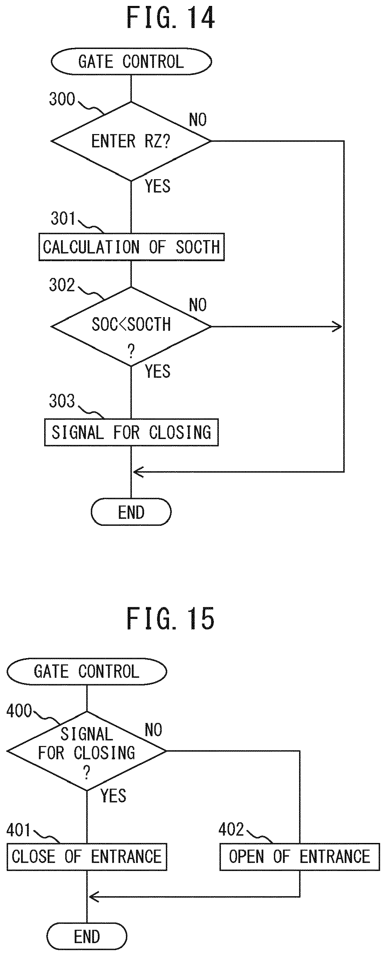

FIG. 14 shows a routine for executing a gate control operation in the embodiment shown in FIGS. 12 and 13, which is repeatedly executed in the electronic control unit 20 of the vehicle 10.

Referring to FIG. 14, first, at step 300, whether the vehicle 10 is about to enter the restriction zone RZ is determined. When it is determined that the vehicle 10 is about to enter the restriction zone RZ, the process then shifts to step 301, and the threshold value SOCTH is calculated. At the following step 302, whether the SOC of the battery 13 is lower than the threshold value SOCTH is determined. When SOC<SOCTH, the process then shifts to step 303, and a signal for closing the entrance ENT of the restriction zone RZ is transmitted to the gate device 70. On the contrary, when it is not determined, at step 300, that the vehicle 10 is about to enter the restriction zone RZ, and when SOC≥SOCTH at step 302, a processing cycle is terminated. That is, in this respect, the transmission of the signal for closing the entrance ENT is stopped.

FIG. 15 shows a routine for executing a gate control operation in the embodiment shown in FIGS. 12 and 13, which is repeatedly executed in the gate device 70.

Referring to FIG. 15, first, at step 400, whether a signal for closing the entrance ENT of the restriction zone RZ has been received from the vehicle 10 is determined. When it is determined that the signal for closing the entrance ENT has been received, the process then shifts to step 401, and the bars 71 are moved to the closing position. On the contrary, when it is not determined that the signal for closing the entrance ENT has been received, the process then shifts to step 402, and the bars 71 are moved to the opening position.

Other configurations and operations of the embodiment shown in FIGS. 12 and 13 are similar to those of the embodiment shown in FIG. 1, and thus the description thereof will be omitted.

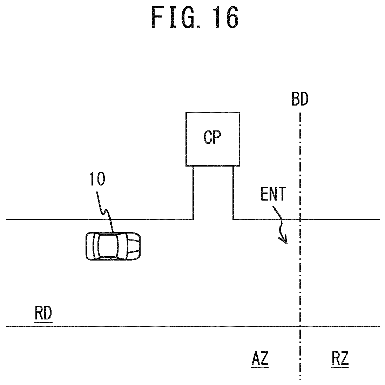

FIG. 16 shows yet another embodiment of the present disclosure. In the embodiment shown in FIG. 16, the charging facility CP is provided in the allowable zone AZ near the entrance ENT of the restriction zone RZ. In this way, it is possible to easily increase the SOC of the battery 13 before the vehicle 10 enters the restriction zone RZ. Therefore, even when the SOC of the battery 13 is lower than the threshold value, the vehicle 10 does not need to bypass the restriction zone RZ.

This application claims the benefit of Japanese Patent Application No. 2021-017426, the entire disclosure of which is incorporated by reference herein.

### [REFERENCE SIGNS LIST]

- 1: control system
- 10: hybrid vehicle
- 11: internal combustion engine
- 12: motor generator
- 13: battery
- 18: alarm
- 20: electronic control unit of vehicle
- 30: server
- 40: electronic control unit of server

## Claims

1. An alarm device adapted for a hybrid vehicle equipped with an internal combustion engine and an electric motor, wherein a restriction zone is defined in advance in a zone in which the hybrid vehicle can move, and the operation of the internal combustion engine should be restricted in the restriction zone,
the alarm device being configured to issue an alarm in response to determining that the SOC of a battery of the hybrid vehicle, which is about to enter the restricted zone, is lower than a predetermined threshold value.

2. The alarm device according to claim 1, wherein the alarm device is configured to issue the alarm in response to determining that the SOC of the battery of the hybrid vehicle, from which the distance to the restricted zone is shorter than a predetermined set distance, is lower than the threshold value.

3. The alarm device according to claim 1 or 2, wherein the alarm device is provided within the hybrid vehicle.

4. The alarm device according to any one of claims 1 to 3, wherein the alarm device is provided outside the hybrid vehicle.

5. The alarm device according to any one of claims 1 to 4, wherein the threshold value is set to an SOC required for the hybrid vehicle to reach a charging facility within the restriction zone.

6. The alarm device according to any one of claims 1 to 5, wherein the threshold value is set to an SOC required for the hybrid vehicle to once enter the restriction zone and then exit the restriction zone.

7. An alarm system adapted for a hybrid vehicle equipped with an internal combustion engine and an electric motor, wherein a restriction zone is defined in advance in a zone in which the hybrid vehicle can move, and the operation of the internal combustion engine should be restricted in the restriction zone,
the alarm system being configured to:
determine whether the hybrid vehicle is about to enter the restriction zone;
determine whether the SOC of a battery of the hybrid vehicle, which is determined to be about to enter the restricted zone, is lower than a predetermined threshold value; and
issue an alarm in response to determining that the SOC of the battery of the hybrid vehicle, which is determined to be about to enter the restricted zone, is lower than the threshold value.

8. A gate device adapted for a hybrid vehicle equipped with an internal combustion engine and an electric motor, wherein a restriction zone is defined in advance in a zone in which the hybrid vehicle can move, and the operation of the internal combustion engine should be restricted in the restriction zone,
wherein:
the gate device is provided at an entrance of the restriction zone; and
the gate device is configured to close the entrance of the restriction zone in response to determining that the SOC of the battery of the hybrid vehicle, which is about to enter the restriction zone from the entrance, is lower than a predetermined threshold value.
